# EUROPEAN PATENT APPLICATION

(11) **EP 4 509 713 A1**
(43) Date of publication of application: **19.02.2025**
(21) Application number: 24195046.8
(22) Date of filing: 16.08.2024
(51) Int. Cl.: F04B 1/295, F04B 1/324, F04B 23/04, F04B 49/06, F04B 51/00, F15B 19/00, G01N 3/36, G01V 1/02

(54) **HYDRAULIC POWER GENERATION PUMP CONTROL**

(30) Priority: 18.08.2023 US 202363520534 P
(71) Applicant: Illinois Tool Works, Glenview, IL 60025 (US)
(72) Inventor: BEGGEL, Hans-Peter, Glenview, 60025 (US); HENNEN, James, Glenview, 60025 (US); KVISTBERG, Kurt, Glenview, 60025 (US); THURMES, Kevin, Glenview, 60025 (US); RINDAHL, Paul, Glenview, 60025 (US)
(74) Representative: HGF

(57) **Abstract**

A hydraulic power unit includes a reservoir containing hydraulic fluid, a main output, a pressure sensor, at least one active valve hydraulic pump and at least one passive valve hydraulic pump. A main flow of the hydraulic fluid is discharged through the main output. The pressure sensor includes a pressure signal that is indicative of a pressure of the main flow. Each active valve hydraulic pump is configured to drive a first flow portion of the main flow from the reservoir to the main output when the pressure signal is below a first pressure setpoint. Each passive valve hydraulic pump is configured to drive a second flow portion of the main flow from the reservoir to the main output when the pressure signal is below a second pressure setpoint.

## Description

### FIELD

Embodiments of the present disclosure generally relate to hydraulic power generation and, more particularly, to hydraulic power generation using two different types of hydraulic pumps.

### BACKGROUND

Dynamic testing systems, such as those developed by MTS Systems Corporation, include testing stations that perform various tests through the application of loads and displacements to a test subject using hydraulic actuators. The testing stations may include, for example, a vehicle testing station that applies simulated driving conditions to a mobile vehicle, or a building testing station that applies simulated seismic activity to a building.

The hydraulic actuators of the testing stations are driven by hydraulic fluid flows that are generated by hydraulic power units. Conventional hydraulic power units include multiple passive valve hydraulic pumps having variable displacements. Such passive valve hydraulic pumps include, for example, hydraulic piston pumps having multiple piston pumps (e.g., piston and cylinder assemblies) having an adjustable working volume for varying the discharged hydraulic fluid flow. Hydraulic fluid flows traveling into and out of the working volumes are controlled using passive (e.g., pressure-actuated) valves. One common type of passive valve hydraulic pump used in hydraulic power units is a variable displacement axial piston pump that utilizes a swash plate to vary the working volume of the piston pumps.

There is a continuous need for improvements to dynamic testing systems, including, for example, improved hydraulic fluid flow generation for meeting rapidly changing flow demands, and improved controls of hydraulic pumps for increasing energy efficiency, reducing energy spikes, and reducing wear and tear on pump components among others.

### SUMMARY

Embodiments of the present disclosure relate to methods of controlling a hydraulic power unit of a dynamic testing system and dynamic testing system configured to perform the methods.

In some embodiments, the hydraulic power unit of a dynamic testing system includes at least one controller, a plurality of hydraulic pumps configured to produce a variable main flow of hydraulic fluid for driving hydraulic actuators of at least one test station during the performance of at least one test. In one embodiment of the method, at least one test flow profile is obtained, each identifying a hydraulic fluid flow demand estimate over time corresponding to the performance of one of the at least one test. The variable main flow of hydraulic fluid is produced using a plurality of unique subsets of the hydraulic pumps during the performance of the at least one test. Each unique subset is selected based on the at least one test flow profile.

In some embodiments, the method includes, for each of a plurality of time periods, identifying a corresponding one of the unique subsets of the hydraulic pumps needed to produce a main flow that exceeds a sum of the hydraulic fluid flow demand estimates corresponding to the time period based on the at least one test flow profile; and producing the variable main flow comprises producing the variable main flow during each of the plurality of time periods using the identified corresponding unique subset of the hydraulic pumps.

In some embodiments, each of the hydraulic pumps is configured to produce up to a maximum flow of hydraulic fluid; and a sum of the maximum flows of the determined subset of the hydraulic pumps exceeds the sum of the hydraulic fluid flow demand estimates for the corresponding time period.

In some embodiments, during each of the plurality of time periods, the corresponding sum of the hydraulic fluid flow demand estimates are located between a lower boundary flow threshold and an upper boundary flow threshold of a plurality of flow thresholds; each flow threshold corresponds to one of the unique subsets of the hydraulic pumps; and for each time period, identifying the corresponding one of the unique subsets of the hydraulic pumps comprises identifying the corresponding one of the unique subsets based on the upper flow threshold.

In some embodiments, each of the hydraulic pumps includes an activated state, in which the hydraulic pump substantially contributes to the variable main flow, and a deactivated state, in which the hydraulic pump does not substantially contribute to the variable main flow; and for at least one of the time periods, producing the variable main flow comprises transitioning one or more of the hydraulic pumps of the corresponding unique subset from the deactivated state to the activated state.

In some embodiments, transitioning one or more of the hydraulic pumps of the corresponding unique subset from the deactivated state to the activated state occurs a predetermined period of time before the start of the at least one of the time periods.

In some embodiments, the predetermined period of time is greater than about 3 seconds.

In some embodiments, each hydraulic pump includes a motor having an activated state, in which it is powered and drives the hydraulic pump, and a deactivated state, in which the motor is not powered; and transitioning one or more of the hydraulic pumps of the determined subset from the deactivated state to the activated state comprises transitioning the motors of the one or more hydraulic pumps from the deactivated state to the activated state.

In some embodiments, the deactivated state of each hydraulic pump includes an idle state of the hydraulic pump, in which the motor is in the activated state.

In some embodiments, for one or more of the time periods, the motors of the hydraulic pumps that are not in the determined subset for the time period are set to the deactivated state.

In some embodiments, the hydraulic power unit comprises: a reservoir containing hydraulic fluid;

a main output through which the variable main flow of the hydraulic fluid is discharged; and the plurality of hydraulic pumps, which includes at least one active valve hydraulic pump having variable displacement and at least one passive valve hydraulic pump having variable displacement.

In some embodiments, each subset includes one of the at least one active valve hydraulic pump.

In some embodiments, each active valve hydraulic pump comprises: a low pressure port connected to the fluid reservoir; a high pressure port connected to the main output; a plurality of piston pumps; a motor configured to drive a cyclical change to a working volume of each piston pump; a plurality of active valves, each corresponding to one of the piston pumps and configured to set the piston pump in an activated state, in which the cyclical change to the working volume drives at least a portion of the variable main flow from the working volume through the high pressure port, and a deactivated state, in which a fluid pathway is formed between the working volume and the reservoir or the low pressure port; and a pump controller configured to control each of the active valves to individually set the piston pumps in the activated or the deactivated state.

In some embodiments, each passive valve hydraulic pump comprises: a low pressure port connected to the fluid reservoir; a high pressure port connected to the main output; a plurality of piston pumps, each configured to draw hydraulic fluid through the low pressure port and into an adjustable working volume, and drive at least a portion of the second flow portion of hydraulic fluid from the adjustable working volume through the high pressure port; and a motor configured to drive a cyclical change to the adjustable working volume of each piston pump.

In some embodiments, obtaining at least one test flow profile comprises measuring at least one flow of hydraulic fluid during a prior performance of the at least one test.

In some embodiments, measuring at least one flow includes measuring at least one flow of hydraulic fluid over time using one or more flowmeters including one or more flowmeters each located at a flow input to one of the at least one test station, one or more flowmeters each located at a flow output from one of the at least one test station, and/or a flowmeter that is located at a main output of the hydraulic power unit.

One example of a dynamic testing system includes at least one test station, a hydraulic power unit, and at least one controller. Each test station is configured to apply a force and/or a displacement to a test subject using hydraulic actuators during the performance of a test. The hydraulic power unit includes a plurality of hydraulic pumps configured to produce a variable main flow of hydraulic fluid that drives the hydraulic actuators of the at least one test station during the performance of at least one test. The at least one controller is configured to obtain at least one test flow profile, each identifying a hydraulic fluid flow demand estimate over time corresponding to the performance of one of the at least one test, and produce the variable main flow of hydraulic fluid using a plurality of unique subsets of the plurality of hydraulic pumps during the performance of the at least one test. Each unique subset is selected based on the at least one test flow profile.

In some embodiments, the at least one controller is configured to: for each of a plurality of time periods, identify a corresponding one of the unique subsets of the hydraulic pumps needed to produce a main flow that exceeds a sum of the hydraulic fluid flow demand estimates corresponding to the time period based on the at least one test flow profile; and produce the variable main flow during each of the plurality of time periods using the identified corresponding unique subset of the hydraulic pumps.

In some embodiments, each of the hydraulic pumps is configured to produce up to a maximum flow of hydraulic fluid; and a sum of the maximum flows of the determined subset of the hydraulic pumps exceeds the sum of the hydraulic fluid flow demand estimates for the time period.

In some embodiments, during each of the plurality of time periods, the corresponding sum of the hydraulic fluid flow demand estimates are located between a lower boundary flow threshold and an upper boundary flow threshold of a plurality of flow thresholds; each flow threshold corresponds to one of the unique subsets of the hydraulic pumps; and for each time period, the corresponding one of the unique subsets of the hydraulic pumps is identified based on the upper flow threshold.

In some embodiments, each of the hydraulic pumps includes an activated state, in which the hydraulic pump substantially contributes to the variable main flow, and a deactivated state, in which the hydraulic pump does not substantially contribute to the variable main flow; and for at least one of the time periods, one or more of the hydraulic pumps of the corresponding unique subset are transitioned from the deactivated state to the activated state to produce the variable main flow.

In some embodiments, for at least one of the time periods, one or more of the hydraulic pumps of the corresponding unique subset are transitioned from the deactivated state to the activated state to produce the variable main flow a predetermined period of time before the start of the at least one of the time periods.

In some embodiments, the predetermined period of time is greater than about 3 seconds.

In some embodiments, each hydraulic pump includes a motor having an activated state, in which it is powered and drives the hydraulic pump, and a deactivated state, in which the motor is not powered; and one or more of the hydraulic pumps of the determined subset are transitioned from the deactivated state to the activated state by transitioning the motors of the one or more hydraulic pumps of the determined subset from the deactivated state to the activated state.

In some embodiments, the deactivated state of each hydraulic pump includes an idle state of the hydraulic pump, in which the motor is in the activated state.

In some embodiments, for one or more of the time periods, the motors of the hydraulic pumps that are not in the determined subset for the time period are set to the deactivated state.

In some embodiments, the hydraulic power unit comprises: a reservoir containing hydraulic fluid; a main output through which the variable main flow of the hydraulic fluid is discharged; and the plurality of hydraulic pumps, which includes at least one active valve hydraulic pump having variable displacement and at least one passive valve hydraulic pump having variable displacement.

In some embodiments, each subset includes one of the at least one active valve hydraulic pump.

In some embodiments, each active valve hydraulic pump comprises: a low pressure port connected to the fluid reservoir; a high pressure port connected to the main output; a plurality of piston pumps; a motor configured to drive a cyclical change to a working volume of each piston pump; a plurality of active valves, each corresponding to one of the piston pumps and configured to set the piston pump in an activated state, in which the cyclical change to the working volume drives at least a portion of the variable main flow from the working volume through the high pressure port, and a deactivated state, in which a fluid pathway is formed between the working volume and the reservoir or the low pressure port; and a pump controller configured to control each of the active valves to individually set the piston pumps in the activated or the deactivated state.

In some embodiments, each passive valve hydraulic pump comprises: a low pressure port connected to the fluid reservoir; a high pressure port connected to the main output; a plurality of piston pumps, each configured to draw hydraulic fluid through the low pressure port and into an adjustable working volume, and drive at least a portion of the second flow portion of hydraulic fluid from the adjustable working volume through the high pressure port; and a motor configured to drive a cyclical change to the adjustable working volume of each piston pump.

In some embodiments, the system includes: one or more flowmeters each located at a flow input to one of the at least one test station; one or more flowmeters each located at a flow output from one of the at least one test station; and/or a flowmeter located at a main output of the hydraulic power unit, wherein each flowmeter is configured to measure a flow of hydraulic fluid.

In another method of controlling a hydraulic power unit of a dynamic testing system using at least one controller, the hydraulic power unit includes a reservoir containing hydraulic fluid, a main output through which a main flow of the hydraulic fluid is discharged, a pressure sensor having a pressure signal that is indicative of a main pressure of the main flow, a plurality of variable displacement hydraulic pumps each configured to drive a portion of the main flow. Each variable displacement hydraulic pump includes a plurality of piston pumps, a motor having an activated state in which the motor drives cyclical change to a working volume of each piston pump, and a deactivated state, and a pressure setpoint. The pressure setpoint is selectable between a range of inoperable pressure setpoints that are below an anticipated operating range of the main pressure, at which the variable displacement hydraulic pump does not contribute to the main flow, and an operable pressure setpoint that is within the anticipated operating range of the main pressure, in which the variable displacement hydraulic pump is driven to contribute to the main flow. In one embodiment of the method, one of the variable displacement hydraulic pumps is controlled by operating the variable displacement hydraulic pump for a first predetermined period while the pressure setpoint is set to a first inoperable pressure setpoint within the range of inoperable pressure setpoints, and operating the variable displacement hydraulic pump while the pressure setpoint is set to the operable pressure setpoint.

In some embodiments, operating the variable displacement hydraulic pump for the first predetermined period occurs before operating the variable displacement hydraulic pump while the pressure setpoint is set to the operable pressure setpoint.

In some embodiments, operating the variable displacement hydraulic pump for the first predetermined period includes transitioning the motor from the deactivated state to the activated state.

In some embodiments, after operating the variable displacement hydraulic pump for a first predetermined period and before operating the variable displacement hydraulic pump while the pressure setpoint is set to the operable pressure setpoint, operating the variable displacement hydraulic pump for a second predetermined period while the pressure setpoint is set to a second inoperable pressure setpoint within the range of inoperable pressure setpoints, wherein the second pressure setpoint is higher than the first pressure setpoint.

In some embodiments, the first and second periods are substantially equal; the first period is greater than the second period; or the first period is less than the second period.

In some embodiments, operating the variable displacement hydraulic pump for the first predetermined period occurs after operating the variable displacement hydraulic pump while the pressure setpoint is set to the operable pressure setpoint.

In some embodiments, operating the variable displacement hydraulic pump for the first predetermined period includes transitioning the motor from the activated state to the deactivated state.

In some embodiments, after operating the variable displacement hydraulic pump while the pressure setpoint is set to the operable pressure setpoint and before operating the variable displacement hydraulic pump for a first predetermined period, operating the variable displacement hydraulic pump for a second predetermined period while the pressure setpoint is set to a second inoperable pressure setpoint within the range of inoperable pressure setpoints, wherein the second pressure setpoint is higher than the first pressure setpoint.

In some embodiments, the first and second periods are substantially equal; the first period is greater than the second period; or the first period is less than the second period.

In some embodiments, operating the variable displacement hydraulic pump for the first predetermined period comprises setting the pressure setpoint to the first inoperable pressure setpoint using a controller; and operating the variable displacement hydraulic pump while the pressure setpoint is set to one of the operable pressure setpoints comprises setting the pressure setpoint to the operable pressure setpoint using the controller.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIG. 1 is a simplified diagram of an example of a dynamic testing system, in accordance with embodiments of the present disclosure.
FIG. 2 is a simplified diagram of an example of a hydraulic power unit, in accordance with embodiments of the present disclosure.
FIG. 3 is a simplified diagram of an example of a hydraulic power system, in accordance with embodiments of the present disclosure.
FIG. 4 is a simplified diagram of an example of a passive valve hydraulic pump, in accordance with embodiments of the present disclosure.
FIG. 5 is a simplified side cross-sectional view of an example of a variable displacement axial pump, in accordance with embodiments of the present disclosure.
FIG. 6 is a simplified diagram of an example of an active valve hydraulic pump, in accordance with embodiments of the present disclosure.
FIGS. 7A-C are simplified drawings illustrating different operational modes of one of a piston pump of the active valve hydraulic pump of FIG. 6, in accordance with embodiments of the present disclosure.
FIG. 8 is a simplified diagram of a controller, in accordance with embodiments of the present disclosure.
FIG. 9 is a schematic diagram of an example of a test station, in accordance with embodiments of the present disclosure.
FIG. 10 is a chart illustrating a test flow profile, in accordance with embodiments of the present disclosure.
FIG. 11 is a flowchart illustrating a method of controlling a hydraulic power unit to produce a variable main flow for driving hydraulic actuators of at least one test station during the performance of at least one test, in accordance with embodiments of the present disclosure.
FIG. 12 includes charts illustrating a pair of overlapping test flow profile examples and the operation of a hydraulic power unit, in accordance with embodiments of the present disclosure.
FIG. 13 is a flowchart illustrating a method of controlling a hydraulic pump of a hydraulic power unit, in accordance with embodiments of the present disclosure.
FIGS. 14 and 15 are charts illustrating examples of adjustments to the pressure setpoint of a hydraulic pump over time to transition the pump between deactivated and activated states, in accordance with embodiments of the present disclosure.

### DETAILED DESCRIPTION OF ILLUSTRATIVE EMBODIMENTS

Embodiments of the present disclosure are described more fully hereinafter with reference to the accompanying drawings. Elements that are identified using the same or similar reference characters refer to the same or similar elements. The various embodiments of the present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art.

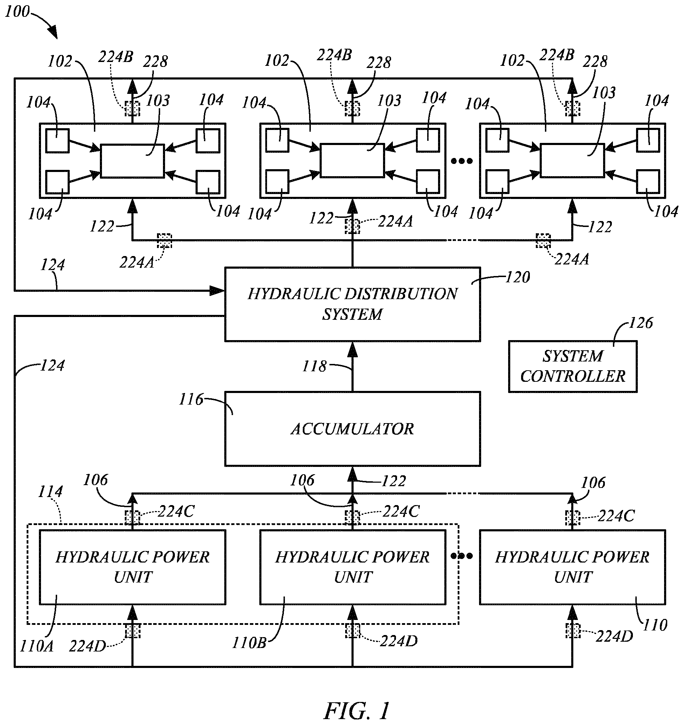

FIG. 1 is a simplified diagram of an example of a dynamic testing system 100, in accordance with embodiments of the present disclosure. The testing system 100 may include one or more test stations 102, each of which may be configured to perform a test or conditions simulation through the application of forces and/or displacements to a test subject 103 (e.g., an automobile, a building, etc.) using hydraulic actuators 104.

The hydraulic actuators 104 are driven by flows 106 of hydraulic fluid that are generated by one or more hydraulic power units (HPU's) 110. The combination of the flows 106 may provide the desired flows demanded by the testing stations 102.

The system 100 may also include one or more hydraulic power systems (HPS) 114. Each HPS 114 comprises a combination of two or more of the HPU's 110, such as HPU 110A and HPU 110B. The hydraulic fluid flows 106 output by each of HPU's 110 are controlled to produce a desired combined hydraulic fluid flow, as discussed below.

The system 100 may include an accumulator 116 that stores pressurized hydraulic fluid received from the HPU's 110 and/or the HPS's 114. The accumulator 116 may discharge a hydraulic fluid flow 118 that may be supplied to the test stations 102.

In some embodiments, the system 100 may include a distributor 120 that receives the hydraulic fluid flow from the HPU's 110, the HPS's 114 and/or the accumulator 116, and distributes the flows of the hydraulic fluid to the test stations 102, as indicated by arrows 122. Other arrangements may also be used to form the system 100.

The system 100 may be a closed system, in which the low pressure hydraulic fluid flows 124 used by the test stations 102 are returned, such as through the hydraulic distribution system 120, back to the HPU's 110, for example.

A system controller 126 may operate to control various aspects of the system 100 including functions of the HPU's 110, the HPS's 114, valving (e.g., valving of the accumulator and/or distributor) and/or other aspects of the system 100 to supply the test stations 102 with the demanded hydraulic fluid flows 122.

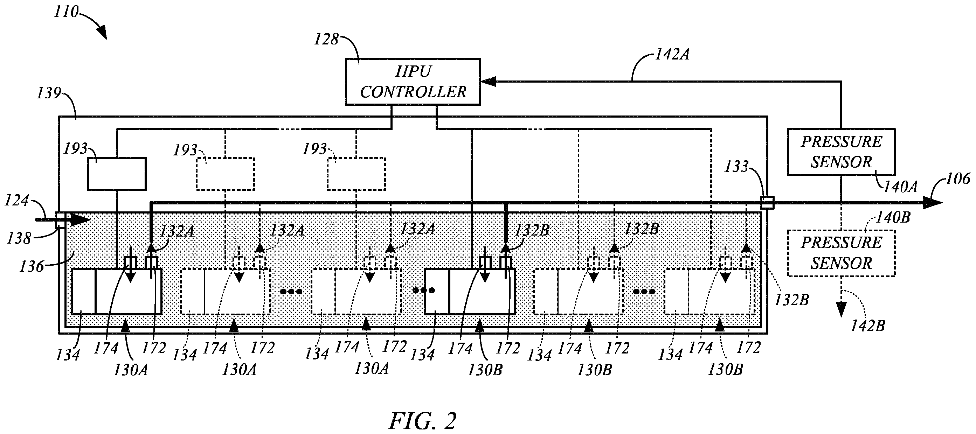

FIG. 2 is a simplified diagram of an example of an HPU 110, in accordance with embodiments of the present disclosure. In some embodiments, each HPU 110 is configured to generate a main hydraulic fluid flow 106, which may have a flow rate of 50 or more gallons per minute, such as up to around 200 gallons per minute or more, for example.

Each HPU 110 may include an HPU controller 128 that controls the operation of the HPU 110 to produce the desired hydraulic fluid flow 106. In some embodiments, the HPU 110 includes two or more pumps 130, each of which is configured to drive a flow 132 of hydraulic fluid that forms at least a portion of the main flow 106, which is discharged through a main output 133. Each of the pumps 130 may take the form of a variable displacement hydraulic pump, such as an axial piston pump, a radial piston pump, a bent axis piston pump, a rotary vane pump, and/or other types of variable displacement hydraulic pumps that are suitable for use in the system 100, for example.

Each pump 130 includes an electric motor 134 for driving the pump 130, such as through a suitable gear arrangement. The motors 134 may be 45 kilowatt or 60 horsepower motors, for example. A cooling system (not shown) may be employed by the HPU 110 to cool the motors 134 and other components of the HPU 110.

In one embodiment, the pumps 130 of one or more of the HPU's 110 of the system 100 include one or more first pumps 130A of a first type and one or more second pumps 130B of a second type, which is different from the first type. For example, the HPU 110 may include 1-5 pumps 130A and 1-5 pumps 130B, such as 1-2 pumps 130A and 2-5 pumps 130B. As discussed below, the pumps 130A and 130B may each have capabilities that complement the other to provide improved performance over conventional HPU's 110 that utilize a single type of pump.

In one embodiment, each of the pumps 130A is an active valve hydraulic pump having a variable displacement, and each of the pumps 130B is a passive valve hydraulic pump having a variable displacement. Examples of the pumps 130A and 130B are described below in greater detail.

In some embodiments, the system 100 may include one or more HPU's 110 having only the pumps 130A and/or one or more HPU's 110 having only the pumps 130B. The system 100 may also utilize one or more HPS's 114 that include a combination of at least one HPU 110 having the pumps 130A and at least one HPU 110 having only the pumps 130B, as discussed below.

In some embodiments, the HPU 110 includes a reservoir 136 of hydraulic fluid, in which each of the pumps 130 may be submersed, as indicated in FIG. 2. The low pressure hydraulic fluid 124 may be returned to the reservoir 136 through a return port 138. Alternatively, the pumps 130 may be located externally to the hydraulic fluid of the reservoir 136 and use, for example, super chargers to draw hydraulic fluid from the reservoir 136.

A housing 139 may enclose the reservoir 136 and the pumps 130, as indicated in FIG. 2.

In some embodiments, each HPU 110 includes a pressure sensor 140 (FIG. 2) that is configured to sense the pressure of the hydraulic fluid flow 106 at the main output 133 and generate a pressure signal 142 that is indicative of the sensed pressure. The pressure signal 142 may be used to control the pumps 130 of the HPU 110.

In some embodiments, each HPU includes redundant pressure sensors 140, such as sensors 140A and 140B that respectively generate pressure signals 142A and 142B that are indicative of the pressure of the main flow 106. The redundant pressure signals 142A and 142B may be used to ensure continued operation of the HPU 110 in the event one of the pressure sensors 140 fails. Additionally, the pressure signals 142 generated by the redundant pressure sensors 140 may be used to detect an abnormality, as discussed below.

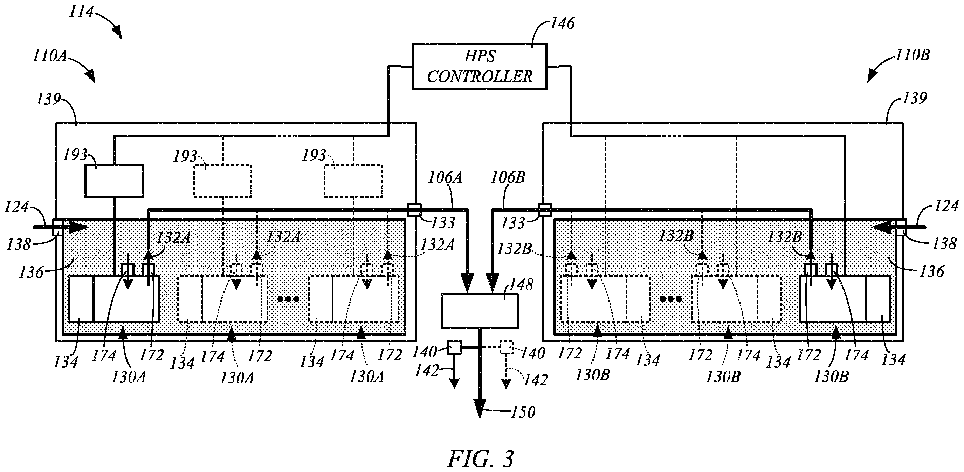

FIG. 3 is a simplified diagram of an example of an HPS 114, in accordance with embodiments of the present disclosure. As mentioned above, each HPS 114 comprises two or more of the HPU's 110 that are each formed in accordance with embodiments described herein. Thus, while the example HPS 114 of FIG. 3 illustrates the combination of two HPU's 110A and 110B, it is understood that an HPS 114 may include three or more HPU's 110.

The HPU's 110 may be controlled by at least one controller, such as the system controller 126, the HPU controllers 128, and/or an HPS controller 146, to produce main flows 106 (e.g., flows 106A and 106B) that are combined by a flow aggregator 148 to produce a desired combined main flow 150 that is used to meet at least a portion of the hydraulic fluid flow demands of the test stations 102 (FIG. 1).

In some embodiments, the HPS 114 comprises an HPU 110A having one or more pumps 130A of the first type, and an HPU 110B having only pumps 130B of the second type. This allows the HPS 114 to take advantage of the benefits of each type of pump in the generation of the combined main flow 150.

The HPS 114 may utilize one or more of the pressure sensors 140 to measure a pressure of the combined main flow 150 discharged through the aggregator 148, as indicated in FIG. 3. In one example, the pressure sensors 140 may take the form of the one or more pressure sensors 140 of each HPU 110, that measure the pressure at the corresponding main output 133. Alternatively, the HPS 114 may include one or more pressure sensors 140 downstream of the main outputs, such as at the output of the aggregator 148, for example, as indicated in FIG. 3.

In some embodiments, each of the pumps 130B is in the form of a passive valve variable displacement hydraulic pump (e.g., variable displacement analog pump) having an adjustable working volume, such as those used in conventional HPU's of dynamic testing systems. These may include conventional variable displacement radial pumps, variable displacement vane pumps, variable displacement axial pumps, or another suitable conventional variable displacement pump.

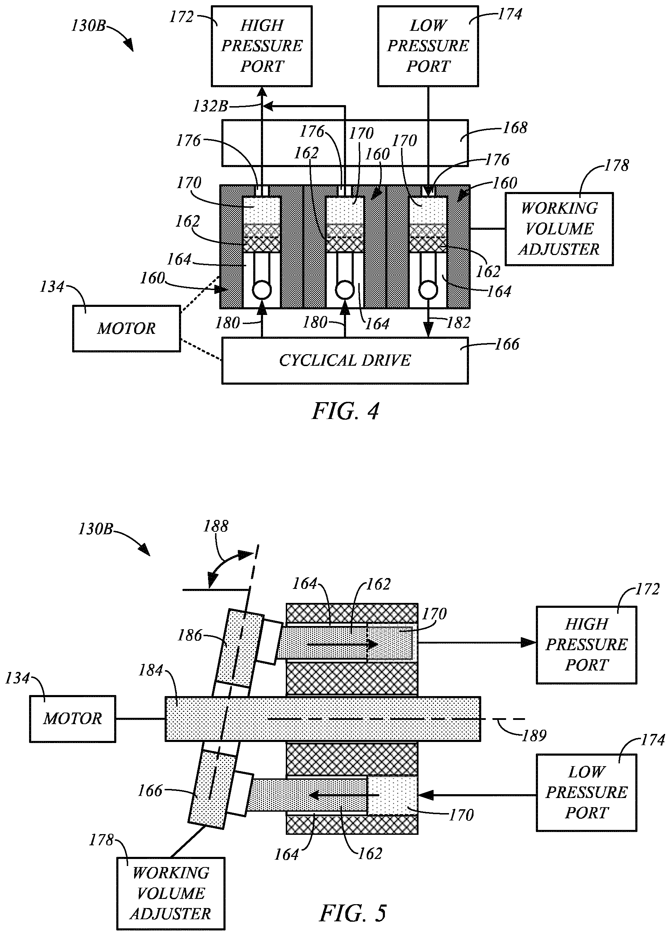

FIG. 4 is a simplified diagram of an example of the pump 130B, in accordance with embodiments of the present disclosure. The pump 130B may include a plurality of piston pumps 160, each comprising a piston 162 contained within a cylinder 164. Each piston 162 is driven within its cylinder 164 in a cyclical or reciprocating manner by a cyclical drive 166 using the motor 134. The motor 134 drives relative movement between the cyclical drive 166 and the piston pumps 160, as with conventional variable displacement hydraulic pumps.

Valving 168 connects a working volume 170 of each piston pump 160 to a high pressure port 172 that is connected to the main output 133 and a low pressure port 174 that is connected to the reservoir 136. The working volume 170 of each piston pump 160 is the maximum volume of hydraulic fluid that may be pulled into or expelled from the cylinder 164 through its port 176 during a stroke cycle of the piston 162.

The pump 130B includes a conventional working volume adjuster 178 that operates to adjust the working volume 170 of each of the piston pumps 160 in a conventional manner. This allows the pump 130B to be transitioned from a zero or near zero displacement mode (e.g., idle mode), in which the pump 130B drives little, if any, hydraulic fluid flow 132B through the high pressure port 172, to a maximum displacement mode, in which the pump 130B drives a maximum hydraulic fluid flow 132B through the high pressure port 172, while the motor 134 is driving relative movement between the piston pumps 160 and the cyclical drive 166.

The valving 168 may be conventional valving comprising passive valves, such as poppet check valves, for example, that allow hydraulic fluid to flow into and out of a working volume 170 of each piston pump 160 depending on the movement of the piston 162. For example, when the cyclical drive 166 moves a piston 160 toward its port 176, as indicated by arrows 180, a flow of hydraulic fluid is driven through the port 176. The valving 168 allows the flow to be delivered to the high pressure port 172 while blocking the flow from being delivered to the low pressure port 174, as indicated in FIG. 4. When the cyclical drive 166 moves a piston 162 away from its port 176, such as indicated by arrow 182, a flow of hydraulic fluid is drawn from the reservoir 136 through the low pressure port 174 and the port 176 and into the cylinder 164. Thus, in this manner, the cyclical movement of the pistons 162 can drive the flows 132B of hydraulic fluid received from the reservoir 136 through the high pressure port 172 and to the main output 133 to form the main flow 106, as shown in FIG. 2.

The cyclical drive 166 and the working volume adjuster 178 may take on any suitable form. When the pump 130B is in the form of a conventional variable displacement radial pump, the cyclical drive 166 may take the form of a cam, and the working volume adjuster 178 may adjust an eccentricity of an axis of rotation of the piston pumps 160 relative to the cam or an axis of rotation of the cam relative to the piston pumps 160 to adjust the working volumes, for example. When the pump 130B takes the form of a conventional variable displacement vane pump, the cyclical drive 166 may take the form of a cam ring that engages vanes of the pistons 162 while the piston pumps 160 are rotated relative to the cam ring. Here, the working volume adjuster 178 may take the form of an eccentricity of the axis of rotation of the piston pumps 160 relative to the cam ring, for example.

The pump 130B may also take the form of a conventional variable displacement axial pump, a simplified side cross-sectional view of an example of which is provided in FIG. 5. Here, the motor 134 may rotate a shaft 184 to which the piston pumps 160 are attached relative to a swash plate 186 that operates as the cyclical drive 166. The swash plate 186 drives the cyclical motion of the pistons 162 to either draw hydraulic fluid into or drive hydraulic fluid from the working volumes 170 of the piston pumps 160 in response to the movement of the piston pumps 160 relative to the swash plate 186. The angle 188 of the swash plate 186 relative to the axis 189 of the shaft 184 determines the working volume 170 of each of the piston pumps 160. The working volume adjuster 178 can adjust the angle 188 from 90 degrees, in which the pump 130B is in its idle mode, to an angle 188 that maximizes the working volumes 170 of the piston pumps, for example.

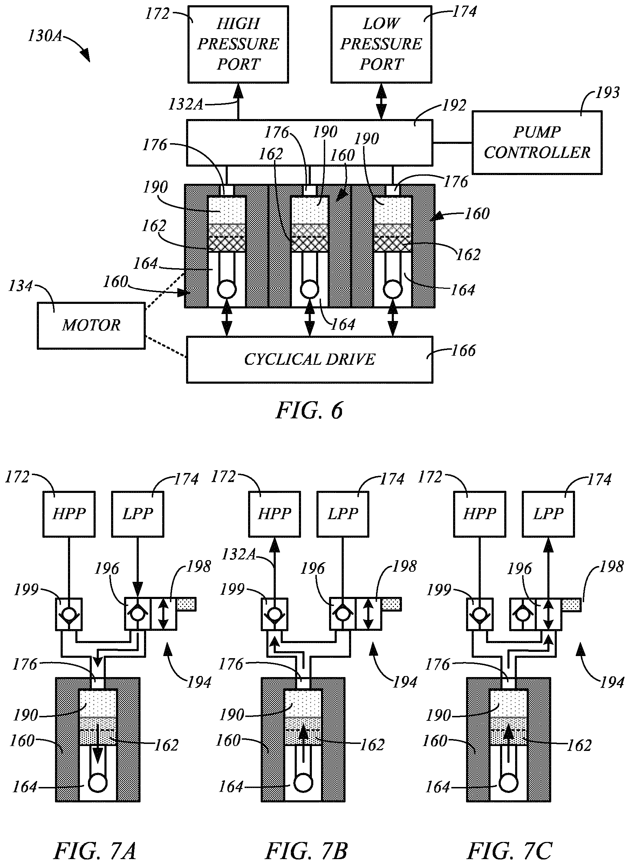

FIG. 6 is a simplified diagram of an active valve hydraulic pump 130A, in accordance with embodiments of the present disclosure. In some embodiments, the pump 130A is in the form of a conventional active valve variable displacement hydraulic pump, which is commonly referred to as a synthetically commutated hydraulic pump or a digital displacement hydraulic pump. Some aspects of the pump 130A are similar to the pump 130B and are labeled similarly. Thus, the cyclical drive 166 and the piston pumps 160 of the pump 130A may be similar to those of the pump 130B. Additionally, the pump 130A may take the form of a variable displacement radial pump, a variable displacement vane pump, or a variable displacement axial pump, such as that disclosed in U.S. Pat. No. 5,190,446.

The pump 130A may have a fixed working volume 190. As a result, the pump 130A lacks the working volume adjuster 178 of the pump 130B. Instead, the variable displacement of flow of hydraulic fluid 132A that is produced by the pump 130A is controlled through the control of active valving 192 by a pump controller 193.

FIGS. 7A-C are simplified drawings illustrating different operational modes of one of the piston pumps 160 of the pump 130A that are made possible by the active valving 192. The active valving 192 may include a solenoid operated poppet valve 194 for each piston pump 160 having a first state in which a poppet valve 196 is in line with the port 176 of the piston pump 160 and blocks flows of hydraulic fluid from the working volume 190 to the low pressure port 174, as illustrated in FIG. 7A. The valve 194 also includes a second state, in which a flow pathway 198 is open between the port 176 of the piston pump 160 and the low pressure port 174, as illustrated in FIG. 7C. The second state of the valve 194 is typically its default (non-energized) state. The active valving 192 may also include a passive valve 199 (e.g., poppet check valve) that allows for a flow of hydraulic fluid from the port 176 of the piston pump 160 to the high pressure port 172 when a pressure threshold is achieved, as indicated in FIG. 7B.

When the valve 194 is in the first state and the cyclical drive 166 moves the piston 162 away from the port 176, hydraulic fluid is drawn from the reservoir 136 through the low pressure port 174 and into the working volume 190 of the piston pump 160, as indicated in FIG. 7A. When the valve 194 is in the first state and the cyclical drive 166 moves the piston 162 toward the port 176, hydraulic fluid is driven from the working volume 190 through the port 176. Since the poppet valve 196 is positioned to block the fluid flow from traveling to the low pressure port 174, the movement of the piston 162 pressurizes the hydraulic fluid and opens the passive valve 199 to allow the hydraulic fluid flow to travel to the high pressure port 172, as indicated in FIG. 7B. As a result, when the active valve 194 is in the first state, the piston pumps 160 of the pump 130A operate in a similar manner as the piston pumps 160 of the pump 130B (FIG. 4).

When the valve 194 is in the second state, the fluid pathway 198 is open between the low pressure port 174 and the port 176 of the piston pump 160, as shown in FIG. 7C. Movement of the piston 162 toward the port 176 driven by the cyclical drive 166 causes hydraulic fluid to be discharged from the working volume 190. Since the discharged hydraulic fluid is not sufficiently pressurized to overcome the threshold pressure of the passive valve 199, the hydraulic fluid travels to the low pressure port 174 through the fluid pathway 198. Likewise, hydraulic fluid may be drawn into the working volume 190 from the low pressure port 174 through the fluid pathway 198 as the piston 162 moves away from the port 176 by the cyclical drive 166. Thus, when the active valve 194 is in the second state, the pump 130A may be in an idle state in which the pump 130A does not drive a flow 132A of hydraulic fluid to the main output 133, while the motor 134 drives relative movement between the piston pumps 160 and the cyclical drive 166.

Accordingly, the flow 132A of hydraulic fluid discharged by the pump 130A to the main port 133 may be controlled based on the number of the piston pumps 160 that are "activated" through the setting of the active valve 194 in the first state, and the timing of the activation of the piston pumps 160, as understood by those skilled in the art.

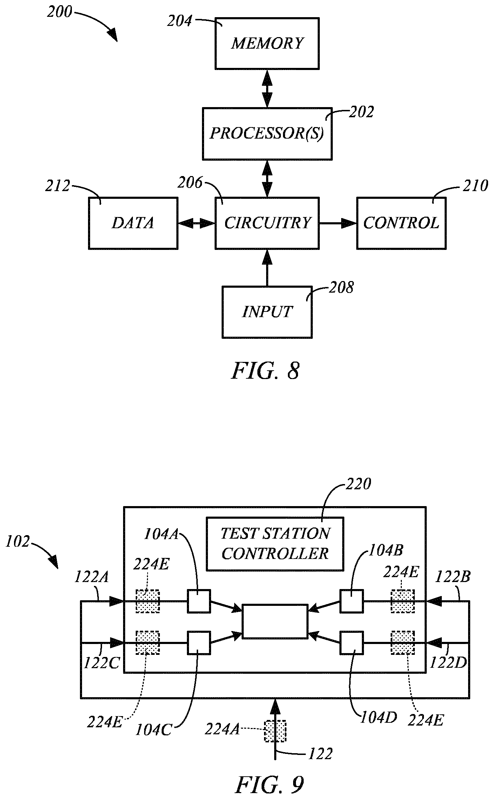

The controllers of the system, such as the system controller 126, the HPU controller 128, the HPS controller 146 and the pump controller 193, may take on any suitable form to control the various functions described herein, such as that of the example controller 200 shown in the simplified diagram of FIG. 8. The controller 200 may include one or more processors 202 and memory 204. The one or more processors 202 are configured to perform various functions described herein in response to the execution of instructions contained in the memory 204.

The one or more processors 202 may be components of one or more computer-based systems, and may include one or more control circuits, microprocessor-based engine control systems, and/or one or more programmable hardware components, such as a field programmable gate array (FPGA). The memory 204 represents local and/or remote memory or computer readable media. Such memory 204 comprises any suitable patent subject matter eligible computer readable media and does not include transitory waves or signals. Examples of the memory 204 include conventional data storage devices, such as hard disks, CD-ROMs, optical storage devices, magnetic storage devices and/or other suitable data storage devices. The controller 200 may include circuitry 206 for use by the one or more processors 202 to receive input signals 208 (e.g., sensor signals 100), issue control signals 210 (e.g., signals for controlling the pumps, signals for actuating the active valving, etc.) and/or communicate data 212, such as in response to the execution of the instructions stored in the memory 204 by the one or more processors 202.

Some embodiments of the present disclosure are directed to the operation of the HPU 110 having a combination of the pumps 130A and 130B, in which each type of pumps 130 may be utilized based on its particular attributes to provide improved responsiveness to changing demands for flows of hydraulic fluid by the test stations 102 while efficiently supplying a demanded flow of hydraulic fluid. In general, the active valve hydraulic pumps 130A have the ability to adjust their output flows 132A of hydraulic fluid much quicker than the passive valve hydraulic pumps 130B. For example, the pumps 130A can adjust the output flows 132A of the hydraulic fluid by adjusting the number of activated piston pumps 160 through a control of the states of the active valves 194, as well as the timing of the activations. However, the pumps 130B must use the working volume adjuster 178 to adjust their output flows 132B of the hydraulic fluid. This takes a considerably longer time to make a given change in the output flows 132B relative to the time required to make a similar change to the output flows 132A by the pumps 130A. For example, the pumps 130A may have a response time (e.g., 50 milliseconds) that is about ten times faster than the response time (e.g., 2-4 seconds) of the pumps 130B.

The passive valve hydraulic pumps 130B generally suffer higher heat loss and have lower volumetric energy efficiency when operating at idle over the pumps 130A. However, the pumps 130B have a high volumetric efficiency when operating at about 70% or more of their outlet flow capacity at pressure.

In some embodiments of the present disclosure, the passive valve hydraulic pumps 130B are generally used to provide flows 132B that fulfill the bulk of the demanded (e.g., steady state) hydraulic flow 106 at the main output 133, while the active valve hydraulic pumps 130A are used to quickly provide needed flows 132A of hydraulic fluid to meet an increase or decrease in the demanded flow 106. Thus, the combined use of the pumps 130A and 130B allows the HPU 110 to efficiently meet the bulk of a flow demand, such as during steady state conditions, using the pumps 130B, while providing much faster response to changing flow demands over conventional HPU's through the use of the pumps 130A.

When a test performed by one or more of the test stations 102 demands an increase in the flow 106 of hydraulic fluid, the pressure at the main output 133 drops. Likewise, a decrease in the flow 106 demanded by the test stations 102 causes an increase in the pressure at the main output 133. These pressure changes are detected by, for example, the HPU controller 128 using the pressure signal 142 from the sensor 140. Thus, the output flows 132A and 132B from pumps 130A and 130B may be controlled based on the pressure sensed at the main output 133.

In some embodiments, one or more of the active valve hydraulic pumps 130A are activated to generate the corresponding flows 132A when the pressure indicated by the pressure signal 142 drops below a first pressure setpoint, and one or more of the passive valve hydraulic pumps 130B are activated to generate the corresponding flows 132B when the pressure indicated by the pressure signal 142 drops below a second pressure setpoint. Additionally, the pumps 130 are controlled to decrease the produced flows 132 of hydraulic fluid when the pressure at the main output rises above the first pressure setpoint, such as by deactivating one or more of the piston pumps 160 of the active valve hydraulic pumps 130A and adjusting the working volume 170 of the piston pumps 160 of the passive valve hydraulic pumps 130B using the working volume adjuster 178, for example.

The HPU controller 128, or another controller, may store a desired first pressure setpoint in its memory 204 and issue control signals 210 to the pump controllers 193 of the pumps 130A such that they operate as described above. The second pressure setpoint may be controlled manually (e.g., pressure control valve) or through signals issued by the HPU controller 128 or another controller of the system 100. In one example, each pump 130B may include one or more remote pressure control valves (e.g., proportional valves), each of which controls the second pressure setpoint in response to control signals 210 issued by the HPU controller 128 or another controller of the system 100.

In one embodiment, the first pressure setpoint is less than the second pressure setpoint. In one example, the first pressure setpoint is approximately 1-5% less than the second pressure setpoint, such as 2-3% less. As a result, while the pressure at the main output 133 is less than the second pressure setpoint but greater than the first pressure setpoint, one or more of the passive valve hydraulic pumps 130B attempt to substantially meet the demanded flow 212 by adjusting the working volume 170 of the piston pumps 160 using the working volume adjuster 178. In the event the pumps 130B are slow in reacting to a demand for increased flow, or are already operating at their maximum capacity, the pressure at the main output 133 will drop below the first pressure setpoint, thus triggering the activation of one or more of the piston pumps 160 of the active valve hydraulic pumps 130A and the production of the flows 132A. This results in a rapid increase in the main flow 106 (line 212) to meet the demanded flow 210. When the pressure at the main output 133 rises above the first pressure setpoint, the output flow 132A from the one or more pumps 130A is decreased as the pumps 130B can take over and produce the bulk of the flow 106 (line 212) through the main output 133.

The first pressure setpoint may be greater than the second pressure setpoint. In one example, the first pressure setpoint is approximately 1-5% greater than the second pressure setpoint, such as 2-3% greater. When pressure at the main output 133 is less than the first pressure setpoint but greater than the second pressure setpoint, one or more of the active valve hydraulic pumps 130A attempt to substantially meet the demanded flow 106 by activating one or more of the piston pumps 160. In the event the pumps 130A are unable to meet the demand for increased flow, or are already operating at their maximum capacity, the pressure at the main output 133 will drop below the second pressure setpoint, thus triggering the activation of one or more of the passive valve hydraulic pumps 130B and the production of the flows 132B. This results in an increase in the main flow 106. When the pressure at the main output 133 rises above the second pressure setpoint, the output flow 132B from the one or more pumps 130B is decreased as the pumps 130A take over and produce the bulk of the flow 106 through the main output 133.

In yet another embodiment, the first and second pressure setpoints are set to substantially the same pressure (e.g., +/- 0.8%). Thus, the flows 132A and 132B from the active valve hydraulic pumps 130A and the passive valve hydraulic pumps 130B are produced as the pressure at the main output 133 fluctuates around the first and second pressure setpoints. When the demanded flow increases starkly causing a drop in the pressure at the main output 133, the flows 132A and 132B are increased to meet the demand, with the flows 132A generally increasing more rapidly than the flows 132B. Likewise, as the demanded flow decreases, the pressure at the main output 133 increases causing the pumps 130A and 132B to decrease their flows 132A and 132B until the pressure is stabilized around the first and second pressure setpoints.

FIG. 9 is a schematic diagram of an example of a test station 102, in accordance with embodiments of the present disclosure. As mentioned above, the test station 102 includes a plurality of hydraulic actuators 104, such as hydraulic actuators 104A-D, that are configured to apply a force and/or drive a motion to the test subject 103. Each of the hydraulic actuators 104A-D is driven by a corresponding flow portion 122A-D of the hydraulic fluid flow 122 that is generated by one or more of the hydraulic power units 110 (FIG. 1).

Each test station 102 may include a test station controller 220 that may take the form of the example controller 200 shown in FIG. 8. The test station controller 220 is generally configured to perform a test on the test subject 103 based on the execution of a test program (e.g., stored in the memory 204) using the one or more processors 202, for example. The test station controller 220 controls the actuators 104 using the hydraulic fluid flow 122 supplied by one or more of the hydraulic power units 110 and valving (not shown), to apply forces and/or motions in a conventional manner to the test subject 103 using the hydraulic actuators 104 in response to the execution of the test program.

During the performance of the test, the hydraulic fluid flow 122 varies in response to the varying operation of the actuators 104. As a result, each time the test is performed a pattern of the flow 122 is repeated.

Embodiments of the present disclosure include methods of controlling the hydraulic power units based on the patterns or test flow profiles of the flows 122 supplied to the test stations 102 during testing operations.

In some embodiments, each test flow profile is obtained through a measurement of the volumetric flow rate (hereinafter "flow rate") of the hydraulic fluid flow 122 to a given test station 102 over time during the performance of a test. Thus, each measured test flow profile corresponds to the flow rate pattern of the flow 122 during the performance of the test. The test flow profile may then be used during future performances of the test to control the activation and deactivation of the hydraulic pumps 130 of the one or more hydraulic power units 110 that are responsible for supplying the hydraulic fluid flow 122 during the performance of the test.

For example, rather than activating all of the hydraulic pumps 130 during the entire performance of the test, only various subsets of the hydraulic pumps 130 may be activated as necessary to provide the demanded fluid flow 122. Thus, when the demanded hydraulic fluid flow 122 during a test does not require the activation of all of the hydraulic pumps 130, only the subset of the hydraulic pumps 130 required to provide the demanded fluid flow 122 may be activated, while the other hydraulic pumps 130 may be deactivated. This not only provides significant energy savings, but also avoids unnecessary wear and tear on the hydraulic pumps 130 and other components of the system 100.

In some embodiments, the system 100 includes one or more flowmeters 224 for measuring the flow rate of the flow 122 through each test station 102, as indicated in FIGS. 1 and 9. For example, as shown in FIG. 1, the system 100 may include a flowmeter 224A located at a flow input of each test station 102 to measure the flow rate of the hydraulic fluid flows 122, and/or a flowmeter 224B located at a flow output of each test station 102 to measure the flow rate of the hydraulic fluid flows 228 discharged from each test station 102, which are substantially equal to the corresponding input fluid flows 122.

Flowmeters 224C may be used to measure the flow rate of the hydraulic fluid flow 106 discharged from the hydraulic power units 110, and/or flowmeters 224D may be used to measure the flow rates of the hydraulic fluid flow returned to the hydraulic power units 110. The flow rates measured by the flowmeters 224C and/or 224D may indicate the flow rate of the hydraulic fluid flows 122 to one or more of the test stations 102 during the performance of one or more tests.

In one embodiment, flowmeters 224E may be used to measure the flow rate of the hydraulic fluid flows (e.g., flows 122A-D) to each actuator 104, as indicated in FIG. 9. Here, the flow rate of the input hydraulic fluid flow 122 or the output hydraulic fluid flow 228 may be determined by summing the flow rates measured by the flowmeters 224E.

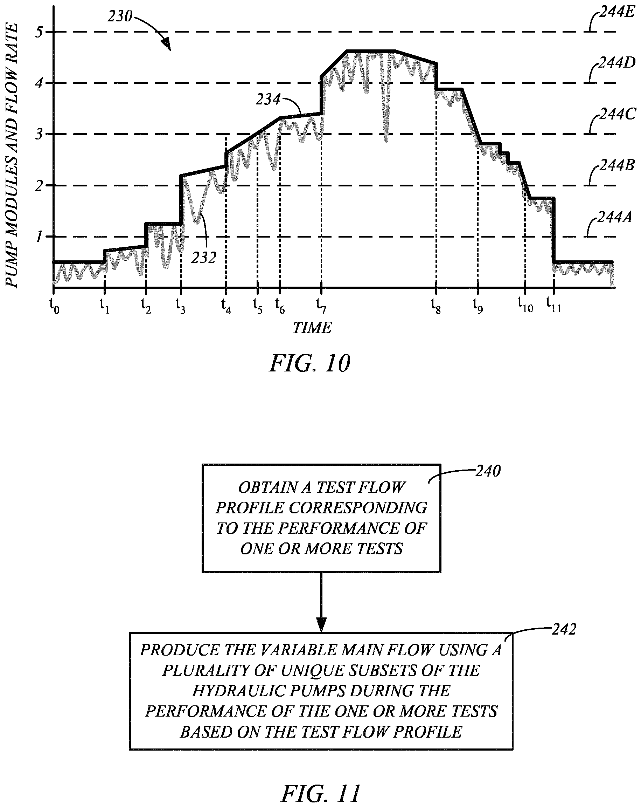

FIG. 10 is a chart illustrating a test flow profile 230, in accordance with embodiments of the present disclosure. The test flow profile 230 represents the varying flow rate 232 (grey line) of the inflow 122 (and the outflow 224) over time during the performance of a given test that has been measured using one or more of the flowmeters 224 described above during a prior performance of the test.

The test flow profile 230 may take on any suitable form. For example, the test flow profile 230 may mirror the measured flow rate 232 over time. Alternatively, the test flow profile 230 may generally follow a contour of the maximum values of the measured flow rate 232 that eliminates high frequency changes, as indicated by the black line 234 in FIG. 10. The test flow profile 230 may also be represented by delta values at various times indicating a change in the flow rate 232 or a change in the contour line 234, such as at times t₁, t₂, t₃, etc. Other forms of the test flow profile 230 may also be used.

FIG. 11 is a flowchart illustrating a method of controlling a hydraulic power unit 110 to produce a variable main flow 106 for driving hydraulic actuators 104 of at least one test station 102 during the performance of at least one test using at least one controller, in accordance with embodiments of the present disclosure. The controller may take the form of the system controller 126, the hydraulic power unit controller 128, the test station controller 220, and/or another controller of the system 100. Hereinafter, this controller will be referred to as the hydraulic power unit controller 128.

At 240, at least one test flow profile 230 is obtained. As discussed above, each test flow profile 230 identifies a hydraulic fluid flow demand estimate of the flow 122 to the test station 102 over time corresponding to the performance of a test performed by the test station 102.

In one example, each test station controller 220 may notify the hydraulic power unit controller 128 of the start of a given test or a future start of a test. The hydraulic power unit controller 128 obtains the test flow profiles corresponding to the notifications, such as from its memory 204. The notification from each test station 102 may include an identification of the test station 102, which may be mapped to one of the test flow profiles 230, or an identification of the test to be performed. This information may be used by the hydraulic power unit controller 128 to obtain the corresponding test flow profile 230. These notifications may take any suitable form, such as electrical signals, data communications, or other types of notifications.

At 242 of the method, the hydraulic power unit 110 is controlled to produce the variable main flow 106 of hydraulic fluid using a plurality of unique subsets of the hydraulic pumps 130 during the performance of the at least one test. Each of the unique subsets is selected based on the at least one test flow profile 230. Thus, the test flow profiles 230 of one or more tests are used to determine different subsets of the plurality of hydraulic pumps 130 of one or more hydraulic power units 110 that are to be activated and/or deactivated over time to supply main flows 106 that meet the flow demands 122 of one or more tests being performed by one or more of the test stations 102.

In some embodiments, flow thresholds (FIG. 10) are used to determine the unique subsets of the hydraulic pumps 130 that are used in step 242 to meet the estimated flow demands 122 of the test stations 102 presented in the flow profiles 230. Since each pump 130 is configured to supply up to a maximum flow portion 132 of the main flow 106, a single pump 130 may be activated to supply flow portions 132 that sum up to a first flow threshold 244A, two of the pumps 130 may be activated to supply flow portions 132 that sum up to a second flow threshold 244B, three of the pumps 130 may be activated to supply flow portions 132 that sum up to a third flow threshold 244C, and so on for additional flow thresholds 244, such as flow thresholds 244D and 244E shown in FIG. 10. The pumps 130 that are not needed to meet the estimated flow demands indicated in the test flow profiles 230 of the one or more tests being performed may be set to a deactivated state by the controller 128 in step 242.

The activated state of each pump 130 generally corresponds to a state in which the pump 130 is prepared to substantially contribute to the variable main flow 106 or produce a flow portion 132 that substantially contributes (e.g., more than 3%) to the main flow 106 during step 242. In one embodiment, a pump 130 is placed in the activated state when the motor 134 of the pump 130 is in an activated state, in which it is powered and drives the operation of the pump 130.

In one embodiment, the pumps 130 are in the deactivated state when the motor 134 of the pump 130 is in a deactivated state, in which it is not powered.

Alternatively, the deactivated state of the pumps 130 may correspond to an idle state, in which the motor 134 is in the activated state, but any flow portion 132 produced by the pump 130 does not substantially contribute (e.g., more than 3%) to the main flow 106. For example, the active valve hydraulic pump 130A (FIG. 6) may be set to a deactivated state by controlling the active valving 192 to direct the hydraulic fluid flows to the low pressure port 174 while the corresponding motor 134 is activated, and the passive valve hydraulic pump 130B (FIG. 4) may be set to a deactivated state using the working volume adjuster 178 to set the flow portion 132 to a minimum value that does not substantially contribute to the main flow 106 while the corresponding motor 134 is activated.

The flow thresholds 244 may be determined based on the type of hydraulic pump 130 (e.g., 130A or 130B) and its flow capacity. In some embodiments, the flow thresholds 244 include a buffer such that the flow thresholds 244 span a range of flow rates and are generally less than the flow generation capacity of the corresponding hydraulic pump 130. For example, if the pumps 130 each have a flow generation capacity of 100 gallons per minute, the flow thresholds 244 may be spaced at 90 gallons per minute, for example.

The flow thresholds 244 may be applied to the flow rate profile 230 to determine the unique subsets of the hydraulic pumps 130 that are to be activated during various time periods of a test to drive the main flow 106 during step 242 to meet the demanded flow(s) 122 during the performance of the test. When the test flow profile 230 indicates that the currently demanded flow rate of the flow 122 is between upper and lower boundary flow thresholds 244, the upper boundary flow threshold 244 may be used to determine the unique subset of the hydraulic pumps 130 that is used to provide the currently demanded flow 122. Due to the buffer, the sum of the maximum flow portions 132 of the pumps 130 of the unique subset exceeds the flow rate indicated by the upper boundary flow buffer 244.

For example, during the period of t₀ to t₂ when the flow rate of the flow 122 for a given test estimated by the flow profile 230 (FIG. 10) is below the first flow threshold (upper flow threshold) 244A, a first of the hydraulic pumps 130 (e.g., one of the pumps 130A) forming a unique subset of the pumps 130 may be activated in step 242 to supply a flow portion 132 that meets the demanded flow 122 of the test during that time period. During the period t₀ to t₂ the other pumps 130 of the hydraulic power unit 110 that are not in the unique subset for the period may be deactivated since they are not needed to supply the demanded flow 122. Thus, when the hydraulic power unit 110 includes six hydraulic pumps 130, such as indicated in FIG. 2, during the period t₀ to t₂ a subset consisting of the first pump 130 is activated and the remaining five pumps 130 that are not in the subset are deactivated, for example.

At time t₂, when the estimated demanded flow rate of the flow 122 for the test indicated by the test flow profile 230 increases above the first flow threshold (lower flow threshold) 244A and below the second flow threshold (upper flow threshold) 244B, a second of the hydraulic pumps 130 (e.g., one of the pumps 130B) may be activated to provide an additional flow portion 132 that, when combined with the flow portion 132 provided by the first pump 130, meets the estimated demanded flow rate of the flow 122 indicated by the test flow profile 230. Thus, a subset of two of the pumps 130 of the hydraulic power unit are activated in step 242 to provide the demanded flow 122 while the other pumps 130 may be deactivated. Likewise, at time t₃, the demanded flow rate exceeds the second flow threshold (lower flow threshold) 244B and is below the third flow threshold (upper flow threshold) 244C requiring the activation of a third pump 130 to meet the estimated flow demand, thus forming a subset of three pumps 130 that are activated and drive the flow 122 in step 242, while the other pumps 130 may remain deactivated.

Likewise, when the flow profile 230 indicates that the demanded flow 122 transitions from above a lower flow threshold to below the lower flow threshold, the lower flow threshold becomes an upper flow threshold and is used to determine the subset of the pumps 130 needed to drive the demanded flow 122. For example, from time t₇ to t₈, the flow profile 230 indicates that the demanded flow 122 is between an upper flow threshold 244E and a lower flow threshold 244D, but at time t₈ the estimated demanded flow rate drops below the flow threshold 244D while remaining above the flow threshold 244C. Thus, during the period of t₈ to t₉, the flow threshold 244D operates as the upper flow threshold and determines the subset of four pumps 130 used to meet the demanded flow 122 in step 242. As a result, the pump 130 corresponding to the flow threshold 244E that was activated during the period t₇ to t₈ may be deactivated at or around time t₈.

In some embodiments, the controller 128 transitions the pumps 130 from a deactivated state to the activated state a predetermined period of time before the onset of the time period during which the pumps 130 are included in the activated subset used to contribute to the variable main flow 106 and assist in satisfying the demanded flows 122. In some embodiments, the predetermined period allows the corresponding motors 134 to transition from the deactivated state to the activated state and begin to drive the pumps 130 in a manner that they can substantially contribute to the main flow 106. Examples of the predetermined period of time include about 2-6 seconds, such as greater than about 3 seconds. Other predetermined time periods may be used based on the characteristics of the pumps 130 and their motors 134. Accordingly, referring again to FIG. 10, the controller 128 may activate the pump 130 corresponding to the flow threshold 244B a predetermined period of time before time t₂ so that the pump 130 is ready to contribute to the main flow 106 and assist in meeting the demanded flow 122 at or around time t₂.

In some embodiments, a hydraulic power unit 110 may provide a main flow 106 that is used to supply demanded flows 122 for the performance of multiple tests by the test stations 102, which, at times, may overlap. In such a case, the hydraulic power unit controller 128 aggregates the test flow profiles 230 of the tests at the overlapping time periods to determine the unique subsets of the hydraulic pumps 130 that are to be activated to produce the variable main flow 106 that meets the demanded flows 122 during those time periods.

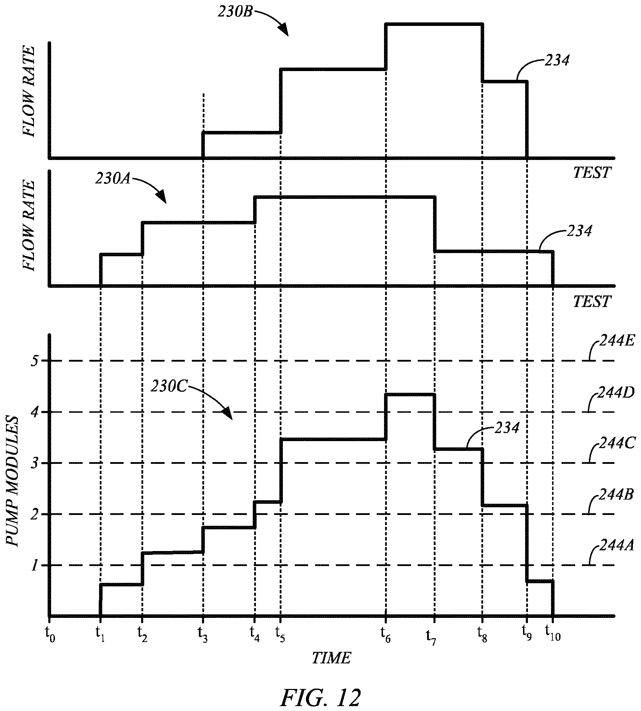

An example of this is shown in FIG. 12, which includes charts illustrating a pair of examples of test flow profiles 230A and 230B respectively corresponding to first and second tests and the operation of a hydraulic power unit 110 during the performance of the tests, in accordance with embodiments of the present disclosure. In some embodiments, the test station 102 performing the first test notifies the hydraulic power unit controller 128 of the beginning of the first test, and the controller 128 obtains (step 240) the test flow profile 230A corresponding to the first test. The test station 102 performing the second test notifies the hydraulic power unit controller 128 of the beginning of the second test, and the controller 128 obtains (step 240) the test flow profile 230B corresponding to the second test.

Since the test flow profile 230A indicates that the test requires a flow 122 that is below the first flow threshold 244A at time t₁, the controller 128 activates a first pump 130 corresponding to the first flow threshold 244A, such as at a predetermined period of time before time t₁, and uses the first pump 130 to produce the flow portion 132 that forms the main flow 106 and satisfies the estimated demanded flow indicated by the test flow profile 230A. Likewise, the controller activates a second pump 130 corresponding to the second flow threshold 244B to produce a flow portion 132 at time t₂ that contributes to the flow portion 132 of the first pump 130 to produce a main flow 106 that satisfies the increased flow indicated at time t₂.

The second test begins at time t₃. Accordingly, the main flow 106 must satisfy both the demanded flow 122 for the test station 102 performing the first test and the demanded flow 122 for the test station 102 performing the second test. As a result, the controller 128 aggregates the test flow profiles 230A and 230B to form the aggregated test flow profile 230C that controls the operation of the hydraulic power unit 110. Since, at time t₃, the total of the estimated demanded flows indicated by the aggregated test flow profile 230C remains under the second flow threshold 244B, no change to the activated pumps 130 is required. However, at time t₄, an increase in the estimated demanded flow indicated by the test flow profile 230A causes the aggregated estimated demanded flow of the profile 230C to exceed the second flow threshold 244B. As a result, a third pump 130 is activated by the controller 128 to ensure that the main flow 106 accommodates the total demanded flow for performing the first and second tests over the time period of t₄ to t₅. Similarly, the controller 128 activates additional pumps 130 at times t₅ and t₆.

At time t₇, the estimated demanded flow indicated by the test flow profile 230C drops transitions from above the third flow threshold 244C to below the third flow threshold 244C, as a result, one of the pumps 130 in the subset used to drive the main flow 106 during the period of t₆ to t₇ is deactivated, leaving a subset of three pumps 130 to drive the main flow 106 and supply the flows 122 demanded by the test stations 102 at time t₇ and during the period of t₇ to t₈. Similar adjustments are made at times t₉ when the second test is completed, and at t₁₀ when the first test is completed.

This process may be used to supply a main flow 106 that satisfies the demanded flows 122 of multiple test stations 102 each performing a test for which a test flow profile 230 has been established through the measurement of the flows 122 during an earlier performance of the test.

In some embodiments, when the hydraulic power unit 110 includes both active valve hydraulic pumps 130A and passive valve hydraulic pumps 130B, one of the active valve hydraulic pumps 130A is selected for satisfying the first flow threshold 244A due to its ability to quickly change its flow portion 132 to match rapid changes in the demanded flow(s) 122. Each of the higher flow thresholds 244 may be matched to one of the other active valve hydraulic pumps 130A or one of the passive valve hydraulic pumps 130B, which generally operate to provide flow portions 132 that satisfy a bulk of the demanded flow(s) 122.

Each hydraulic pump 130 of a unit 110 may be matched to one of the flow thresholds 244 triggering their activation and deactivation by the hydraulic power unit controller 128 based on one or more factors in relation to the other hydraulic pumps 130 of the unit 110. These factors may include, for example, the age of the hydraulic pump 130, the total operational runtime (e.g., hours used) of the hydraulic pump 130, the time since the last activation of the pump 130, and/or other factors. Accordingly, embodiments of the present disclosure include assigning the pumps 130 of a hydraulic power unit 110 to the flow thresholds 244 based on a weighing of one or more of these factors using the hydraulic power unit controller 128.

It may be desirable to reduce the use of the hydraulic pumps 130 of the unit 110 that are the oldest and/or have the longest operational runtimes in an effort to reduce wear and tear on the pumps 130 and prolong their lifespan. Thus, in one embodiment, the pumps 130 that have a greater age, or a longer total operational runtime are weighted toward the higher flow thresholds 244, and the pumps 130 that are younger or have shorter total operational runtimes are weighted toward lower flow thresholds 244. This tends to result in the assignment of the pumps 130 that are older or have longer operational runtimes in the higher flow thresholds 244 where they will have a lower frequency of activation relative to when they are assigned to the lower flow thresholds 244. The age and/or operational runtime of the pumps 130 may be monitored and maintained in the memory 204 of the hydraulic power unit controller 128 and/or the system controller 126 using conventional techniques.

The last activation time may be used to reduce the frequency of activation of the pumps 130 that were most recently activated. This may be helpful in more evenly spreading out the usage of the hydraulic pumps 130. For example, the pumps 130 that were most recently activated may be weighted toward the higher flow thresholds 244 than the pumps 130 that were not as recently activated. This tends to result in the assignment of the pumps 130 that were most recently activated in the higher flow thresholds 244 where they will have a lower frequency of activation, and the assignment of the pumps 130 that were not recently activated to lower flow thresholds 244 where they are more likely to be activated. The time since the last activation for each of the pumps 130 may be monitored and maintained in the memory 204 by the hydraulic power unit controller 128 and/or the system controller 126 using conventional techniques.

Additional embodiments of the present disclosure are directed to methods of activating and/or deactivating the hydraulic pumps 130. Conventional hydraulic power units 110 generally operate variable displacement hydraulic pumps having a working volume adjuster 176 (e.g., swash plate 186) in an on or an off state. That is, the motors 134 of the pumps 130 are activated and drive the pumps 130 to full pressure upon startup, and the pumps 130 immediately attempt to drive flow portions 132 based on their pressure setpoints to form the main flow 106. The abrupt activation and deactivation of the motors 134 produce undesirable rapid electrical power changes that generate electrical spikes and place strains on the pump components (e.g., bearings). Additionally, as newly activated pumps 130 reach an operational pressure where they begin to generate flow portions 132 that contribute to the main flow 106 output by the hydraulic power unit 110, undesirable pressure oscillations may form in the main output flow 106 around the pressure setpoints of the pumps 130 causing oscillations in the working volume adjuster 178, such as oscillations in the angular orientation of the swash plate 186, thereby producing oscillating flow portions 132 that contribute to the unstable pressure of the main flow 106.

Some embodiments of the present disclosure relate to a manner of controlling transitions of the variable displacement hydraulic pumps 130 of the hydraulic power units 110 between the activated and deactivated states to avoid electrical spikes and pressure oscillations in the main flow 106. The units 110 may be formed in accordance with one or more embodiments described herein. For example, the hydraulic power unit 110 includes a reservoir 136, a main output 133 through which a main flow 106 is discharged, a pressure sensor 140 having a pressure signal 142 that is indicative of a main pressure of the main flow 106, and a plurality of variable displacement hydraulic pumps 130, such as the active valve hydraulic pumps 130A and/or the passive valve hydraulic pumps 130B, for example.

Each pump 130 includes a plurality of piston pumps 160, a motor 134 having an activated state in which it drives cyclical change to a working volume of each piston pump 160, and a deactivated (e.g., unpowered) state. As discussed above, each pump 130 has a pressure setpoint and when the main pressure drops below the pressure setpoint, the pump 130 operates to generate a flow portion 132 that contributes to the main flow 106, and when the main pressure is above the pressure setpoint, the pump 130 does not operate to generate a flow portion 132 that contributes to the main flow. The main pressure may range from 2500-3500 pounds per square inch, for example.

The pumps 130 may have an adjustable pressure setpoint that may set to different values through control signals from the hydraulic power unit controller 128 using a proportional valve, for example, as discussed above. In some embodiments, the controller 128 adjusts the pressure setpoints of the pumps 130 as they transition from a deactivated state to an activated state, or from an activated state to a deactivated state to reduce electrical power spikes, strain on components of the pump 130 and pressure oscillations of the main flow 106.

In some embodiments, the pressure setpoint of each pump 130 is adjustable between a value that is within a range of inoperable pressure setpoints and a value that is an operable pressure setpoint. The inoperable pressure setpoints represent pressure values that are below an anticipated operating range of the main pressure, at which the pump 130 does not produce a flow portion 132 that substantially contributes to the main flow 106. For example, the inoperable pressure setpoints may be in a range of a minimum pressure setpoint (e.g., 200 psi) to about 93% of the anticipated operating range of the main pressure, such as 30-90% of the anticipated operating range of the main pressure.

The operable pressure setpoint corresponds to a value that is within the anticipated operating range of the main pressure, such that the pump 130 may produce a flow portion 132 that contributes to the main flow 106 when the main pressure drops below the operable pressure setpoint. Thus, the operable pressure setpoint generally corresponds to a conventional pressure setpoint for the pumps 130, such as 95-99% of the anticipated operating range of the main pressure, for example.

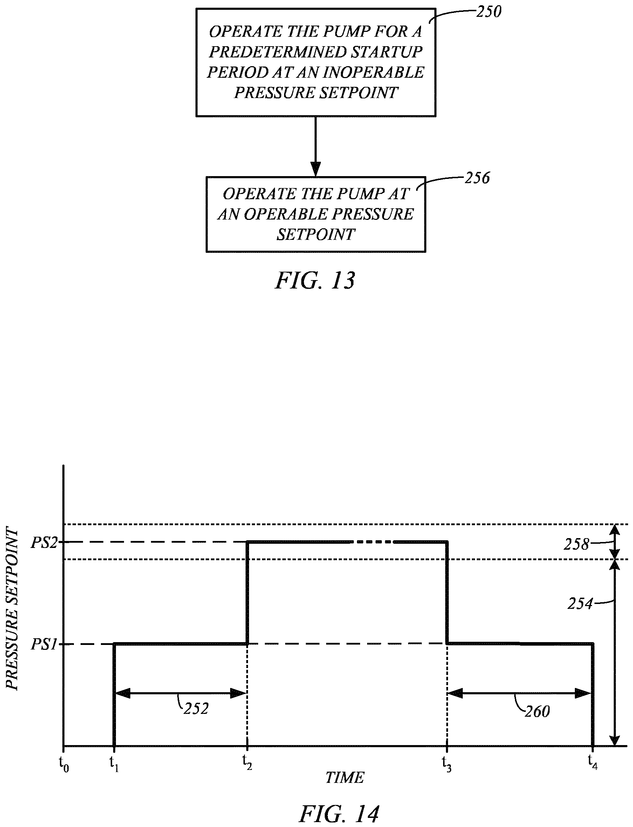

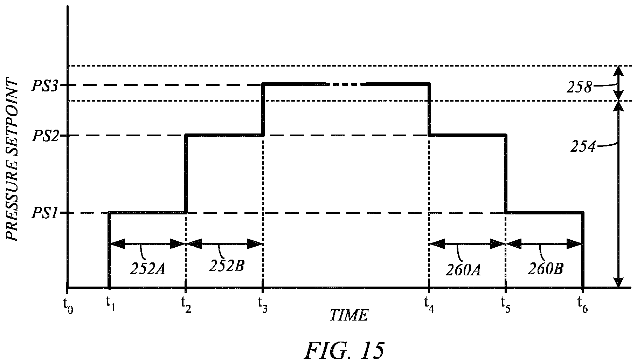

FIG. 13 is a flowchart illustrating a method of controlling one of the pumps 130 of a hydraulic power unit, in accordance with embodiments of the present disclosure. FIGS. 14 and 15 are charts illustrating examples of adjustments to the pressure setpoint of a pump 130 over time in accordance with the method of FIG. 13 to transition the pump between activated and deactivated states, in accordance with embodiments of the method.

At 250 of the method, the pump 130 is operated for a predetermined period 252 (time t₁ to t₂) while the pressure setpoint for the pump 130 is set to a first inoperable pressure setpoint (PS1) within the range of inoperable pressure setpoints 254, as indicated in FIG. 14. Thus, in some embodiments of step 250, the hydraulic power unit controller 128 sets the pressure setpoint of the pump 130 to a value that is within the range of the inoperable pressure setpoints 254, such as 50% of the anticipated operating range of the main pressure, for example.

The predetermined period 252 is set to a value that allows the pump 130 to gradually transition from a deactivated state to an activated state at time t₂ without driving a flow portion 132 that substantially contributes (e.g., greater than 3%) to the main flow 106, which may involve transitioning the motor 134 from the deactivated state to the activated state. Thus, during the predetermined period 252, the pump 130 does not disturb the main flow 106 or contribute to pressure oscillations in the main flow 106. Additionally, since the pump 130 is not attempting to drive a flow portion 132 at the pressure of the main flow, large transient power spikes are avoided, as well as strain on components of the pump 130.

The predetermined period of time 252 may be selected to ensure that the motor 134 drives the cyclical drive 166 to a desired an operational speed (e.g., 1800 revolutions per minute) by the time t₂, and allow the pump 130 to pressurize to the inoperable pressure setpoint PS1. In some embodiments, the predetermined period 252 is about 1-6 seconds, such as about 4-5 seconds or 3 seconds, for example.

At 256 of the method, at time t₂, the pump 130 is operated while the pressure setpoint is set to a value within an operable pressure setpoint range 258, which is indicated by pressure setpoint PS2 in FIG. 14. In some embodiments of step 256, the hydraulic power unit controller 128 sets the pressure setpoint of the pump 130 to a value that is within the range of the operable pressure setpoints 258, such as 98% of the anticipated operating range of the main pressure, for example, at time t2. As a result, the pump 130 transitions to a fully activated state in which it is configured to produce flow portions 132 that substantially contribute to the main flow 106.

In some embodiments of step 256, the pump 130 is transitioned from a deactivated state to the activated state through multiple stages (e.g., 2-5 stages), in which the pump 130 is operated at gradually increasing inoperable pressure setpoints. This is generally illustrated by the chart of FIG. 15.

For example, as the pump 130 is transitioned from a deactivated state to an activated state at time t₁, the pressure setpoint of the pump 130 is initially set to an inoperable pressure setpoint PS1 and operated for a predetermined period 252A (time t₁ to t₂) corresponding to a first stage. At time t₂, the pressure setpoint of the pump 130 is adjusted to an inoperable pressure setpoint PS2 that is greater than the inoperable pressure setpoint PS1 and operated for a predetermined period 252B (time t2 to t3) corresponding to a second stage. For example, the inoperable pressure setpoint PS1 may be set to 5-35% (e.g., 200-1000 psi) of the anticipated operating range of the main pressure, and the inoperable pressure setpoint PS2 may be set between the pressure setpoint PS1 and the operable pressure setpoint PS3, such as 50-80% (e.g., 1500-2400 psi) of the anticipated operating range of the main pressure. Additional stages of operating the pump 130 at inoperable pressure setpoints may be added as desired. As a result, the pump 130 is more gradually transitioned from the deactivated state to the activated state than in the example of FIG. 14.

In some embodiments, the predetermined period 252A is substantially equal (e.g., +/- 5%) to, greater than, or less than, the predetermined period 252B. In some embodiments, the motor reaches its fully operational speed during the predetermined period 252A, or during the predetermined period 252B.

The method of FIG. 13 may also be performed to gradually transition the pump 130 from the activated state to the deactivated state. Here, step 256 is performed before step 250, as generally indicated by the transition at time t₃ in FIG. 14 and at time t₄ in FIG. 15. This gradual deactivation of the pump 130 may occur over a single stage and a predetermined time period 260, as indicated in FIG. 14, or over multiple stages and time periods 260A and 260B as indicated in FIG. 15.

Accordingly, while the pump 130 is operated in the activated state in which the motor 134 is operating at full speed and the pump 130 is set to the operational pressure setpoint (e.g., PS2 in FIG. 14 and PS3 in FIG. 15), the pressure setpoint of the pump 130 is decreased to one of the inoperable pressure setpoints. For example, the pressure setpoint of the pump 130 may be decreased to the inoperable pressure setpoint PS1 at time t₃ in FIG. 14 and decreased to the inoperable pressure setpoint PS2 at an initial deactivation stage beginning at time t₄ in FIG. 15. This prevents the pump 130 from generating flow portions 132 that substantially contribute to the main flow 106. Additional deactivation stages (e.g., 2-5) may be used to more gradually transition the pump 130 to a fully deactivated state, as indicated in FIG. 15.

The predetermined period or periods 260, in which the pump 130 is operated at the inoperable pressure setpoints may be set as desired. The motor 134 may be deactivated (power terminated) at the onset of the deactivation stage, such as at time t₃, during the period 260, or after the time t₄, in the example shown in FIG. 14. When there are multiple deactivation stages as shown in FIG. 15, the motor 134 may be deactivated at the onset of the initial deactivation stage (time t₄), during the initial deactivation stage (e.g., period 260A), gradually over all of the deactivation stages (e.g., periods 260A and 260B), or during or after the final deactivation stage (e.g., period 260B).

When the pump 130 is a passive valve variable hydraulic pump 130B, the working volume adjuster 178 may be transitioned to a minimum or idle setting during the sole or initial deactivation stage, over all of the deactivation stages, or during the final deactivation stage.

The gradual deactivation of the pump 130 shown in FIGS. 14 and 15 can reduce electrical power transients, pressure oscillations in the main flow 106, and strain on the components of the pump 130.

Although the embodiments of the present disclosure have been described with reference to preferred embodiments, workers skilled in the art will recognize that changes may be made in form and detail without departing from the spirit and scope of the present disclosure.

## Claims

1. A method of controlling a hydraulic power unit of a dynamic testing system using at least one controller, the hydraulic power unit including a plurality of hydraulic pumps configured to produce a variable main flow of hydraulic fluid for driving hydraulic actuators of at least one test station during performance of at least one test, the method comprising:
obtaining at least one test flow profile, each identifying a hydraulic fluid flow demand estimate over time corresponding to the performance of one of the at least one test; and
producing the variable main flow of hydraulic fluid using a plurality of unique subsets of the hydraulic pumps during the performance of the at least one test, each unique subset being selected based on the at least one test flow profile.

2. The method according to claim 1, wherein:
the method includes, for each of a plurality of time periods, identifying a corresponding one of the unique subsets of the hydraulic pumps needed to produce a main flow that exceeds a sum of the hydraulic fluid flow demand estimates corresponding to the time period based on the at least one test flow profile; and
producing the variable main flow comprises producing the variable main flow during each of the plurality of time periods using the identified corresponding unique subset of the hydraulic pumps.

3. The method according to claim 2, wherein:
during each of the plurality of time periods, the corresponding sum of the hydraulic fluid flow demand estimates are located between a lower boundary flow threshold and an upper boundary flow threshold of a plurality of flow thresholds;
each flow threshold corresponds to one of the unique subsets of the hydraulic pumps; and
for each time period, identifying the corresponding one of the unique subsets of the hydraulic pumps comprises identifying the corresponding one of the unique subsets based on the upper flow threshold.

4. The method according to claim 2, wherein:
each of the hydraulic pumps includes an activated state, in which the hydraulic pump substantially contributes to the variable main flow, and a deactivated state, in which the hydraulic pump does not substantially contribute to the variable main flow; and
for at least one of the time periods, producing the variable main flow comprises transitioning one or more of the hydraulic pumps of the corresponding unique subset from the deactivated state to the activated state, preferably wherein transitioning one or more of the hydraulic pumps of the corresponding unique subset from the deactivated state to the activated state occurs a predetermined period of time before the start of the at least one of the time periods, and/or wherein:
each hydraulic pump includes a motor having an activated state, in which it is powered and drives the hydraulic pump, and a deactivated state, in which the motor is not powered; and
transitioning one or more of the hydraulic pumps of the determined subset from the deactivated state to the activated state comprises transitioning the motors of the one or more hydraulic pumps from the deactivated state to the activated state.

5. The method according to any one of the previous claims, wherein the hydraulic power unit comprises:
a reservoir containing hydraulic fluid;
a main output through which the variable main flow of the hydraulic fluid is discharged; and
the plurality of hydraulic pumps, which includes at least one active valve hydraulic pump having variable displacement and at least one passive valve hydraulic pump having variable displacement;
and in one embodiment, wherein each subset includes one of the at least one active valve hydraulic pump; and in a further embodiment, wherein:
each active valve hydraulic pump comprises:
a low pressure port connected to the fluid reservoir;
a high pressure port connected to the main output;
a plurality of piston pumps;
a motor configured to drive a cyclical change to a working volume of each piston pump;
a plurality of active valves, each corresponding to one of the piston pumps and configured to set the piston pump in an activated state, in which the cyclical change to the working volume drives at least a portion of the variable main flow from the working volume through the high pressure port, and a deactivated state, in which a fluid pathway is formed between the working volume and the reservoir or the low pressure port; and
a pump controller configured to control each of the active valves to individually set the piston pumps in the activated or the deactivated state; and
each passive valve hydraulic pump comprises:
a low pressure port connected to the fluid reservoir;
a high pressure port connected to the main output;
a plurality of piston pumps, each configured to draw hydraulic fluid through the low pressure port and into an adjustable working volume, and drive at least a portion of the second flow portion of hydraulic fluid from the adjustable working volume through the high pressure port; and
a motor configured to drive a cyclical change to the adjustable working volume of each piston pump.

6. A dynamic testing system comprising:
at least one test station, each configured to apply a force and/or a displacement to a test subject using hydraulic actuators during performance of a test;
a hydraulic power unit including a plurality of hydraulic pumps configured to produce a variable main flow of hydraulic fluid that drives the hydraulic actuators of the at least one test station during the performance of at least one test; and
at least one controller configured to:
obtain at least one test flow profile, each identifying a hydraulic fluid flow demand estimate over time corresponding to the performance of one of the at least one test; and
produce the variable main flow of hydraulic fluid using a plurality of unique subsets of the plurality of hydraulic pumps during the performance of the at least one test, each unique subset being selected based on the at least one test flow profile; and in one embodiment, wherein the at least one controller is configured to:
for each of a plurality of time periods, identify a corresponding one of the unique subsets of the hydraulic pumps needed to produce a main flow that exceeds a sum of the hydraulic fluid flow demand estimates corresponding to the time period based on the at least one test flow profile; and
produce the variable main flow during each of the plurality of time periods using the identified corresponding unique subset of the hydraulic pumps;
and in a further embodiment, wherein:
during each of the plurality of time periods, the corresponding sum of the hydraulic fluid flow demand estimates are located between a lower boundary flow threshold and an upper boundary flow threshold of a plurality of flow thresholds;
each flow threshold corresponds to one of the unique subsets of the hydraulic pumps; and
for each time period, the corresponding one of the unique subsets of the hydraulic pumps is identified based on the upper flow threshold.

7. The system according to claim 6, wherein:
each of the hydraulic pumps includes an activated state, in which the hydraulic pump substantially contributes to the variable main flow, and a deactivated state, in which the hydraulic pump does not substantially contribute to the variable main flow; and
for at least one of the time periods, one or more of the hydraulic pumps of the corresponding unique subset are transitioned from the deactivated state to the activated state to produce the variable main flow; and in one embodiment, wherein for at least one of the time periods, one or more of the hydraulic pumps of the corresponding unique subset are transitioned from the deactivated state to the activated state to produce the variable main flow a predetermined period of time before the start of the at least one of the time periods; and/or
wherein:
each hydraulic pump includes a motor having an activated state, in which it is powered and drives the hydraulic pump, and a deactivated state, in which the motor is not powered; and
one or more of the hydraulic pumps of the determined subset are transitioned from the deactivated state to the activated state by transitioning the motors of the one or more hydraulic pumps of the determined subset from the deactivated state to the activated state.

8. The system according to claim 6, wherein the hydraulic power unit comprises:
a reservoir containing hydraulic fluid;
a main output through which the variable main flow of the hydraulic fluid is discharged; and
the plurality of hydraulic pumps, which includes at least one active valve hydraulic pump having variable displacement and at least one passive valve hydraulic pump having variable displacement;
and in one embodiment, wherein each subset includes one of the at least one active valve hydraulic pump; and/or
wherein:
each active valve hydraulic pump comprises:
a low pressure port connected to the fluid reservoir;
a high pressure port connected to the main output;
a plurality of piston pumps;
a motor configured to drive a cyclical change to a working volume of each piston pump;
a plurality of active valves, each corresponding to one of the piston pumps and configured to set the piston pump in an activated state, in which the cyclical change to the working volume drives at least a portion of the variable main flow from the working volume through the high pressure port, and a deactivated state, in which a fluid pathway is formed between the working volume and the reservoir or the low pressure port; and
a pump controller configured to control each of the active valves to individually set the piston pumps in the activated or the deactivated state; and
each passive valve hydraulic pump comprises:
a low pressure port connected to the fluid reservoir;
a high pressure port connected to the main output;
a plurality of piston pumps, each configured to draw hydraulic fluid through the low pressure port and into an adjustable working volume, and drive at least a portion of the second flow portion of hydraulic fluid from the adjustable working volume through the high pressure port; and
a motor configured to drive a cyclical change to the adjustable working volume of each piston pump.

9. A method of controlling a hydraulic power unit of a dynamic testing system using at least one controller, the hydraulic power unit including:
a reservoir containing hydraulic fluid;
a main output though which a main flow of the hydraulic fluid is discharged;
a pressure sensor having a pressure signal that is indicative of a main pressure of the main flow;
a plurality of variable displacement hydraulic pumps each configured to drive a portion of the main flow, each variable displacement hydraulic pump comprising:
a plurality of piston pumps;
a motor having an activated state in which the motor drives cyclical change to a working volume of each piston pump, and a deactivated state; and
a pressure setpoint that is selectable between:
a range of inoperable pressure setpoints that are below an anticipated operating range of the main pressure, at which the variable displacement hydraulic pump does not contribute to the main flow; and
an operable pressure setpoint that is within the anticipated operating range of the main pressure, in which the variable displacement hydraulic pump is driven to contribute to the main flow,
the method comprising controlling one of the variable displacement hydraulic pumps comprising:
operating the variable displacement hydraulic pump for a first predetermined period while the pressure setpoint is set to a first inoperable pressure setpoint within the range of inoperable pressure setpoints; and
operating the variable displacement hydraulic pump while the pressure setpoint is set to the operable pressure setpoint.

10. The method according to claim 9, wherein, operating the variable displacement hydraulic pump for the first predetermined period occurs before operating the variable displacement hydraulic pump while the pressure setpoint is set to the operable pressure setpoint, and in one embodiment, wherein operating the variable displacement hydraulic pump for the first predetermined period includes transitioning the motor from the deactivated state to the activated state.

11. The method according to claim 10, wherein, after operating the variable displacement hydraulic pump for a first predetermined period and before operating the variable displacement hydraulic pump while the pressure setpoint is set to the operable pressure setpoint:
operating the variable displacement hydraulic pump for a second predetermined period while the pressure setpoint is set to a second inoperable pressure setpoint within the range of inoperable pressure setpoints; and
the second pressure setpoint is higher than the first pressure setpoint.

12. The method according to claim 9, wherein, operating the variable displacement hydraulic pump for the first predetermined period occurs after operating the variable displacement hydraulic pump while the pressure setpoint is set to the operable pressure setpoint.

13. The method according to claim 12, operating the variable displacement hydraulic pump for the first predetermined period includes transitioning the motor from the activated state to the deactivated state.

14. The method of claim 13, wherein, after operating the variable displacement hydraulic pump while the pressure setpoint is set to the operable pressure setpoint and before operating the variable displacement hydraulic pump for a first predetermined period:
operating the variable displacement hydraulic pump for a second predetermined period while the pressure setpoint is set to a second inoperable pressure setpoint within the range of inoperable pressure setpoints; and
the second pressure setpoint is higher than the first pressure setpoint.

15. The method according to claim 9, wherein:
operating the variable displacement hydraulic pump for the first predetermined period comprises setting the pressure setpoint to the first inoperable pressure setpoint using a controller; and
operating the variable displacement hydraulic pump while the pressure setpoint is set to one of the operable pressure setpoints comprises setting the pressure setpoint to the operable pressure setpoint using the controller.
